**Europäisches Patentamt**

**European Patent Office**

**Office européen des brevets**

(19)

(11) Veröffentlichungsnummer: **0 177 008**

**A1**

(12) # EUROPÄISCHE PATENTANMELDUNG

(21) Anmeldenummer: **85112376.0**

(22) Anmeldetag: **30.09.85**

(51) Int. Cl.⁴: **G 11 B 5/52**

(30) Priorität: 30.09.84 CH 4664/84

(43) Veröffentlichungstag der Anmeldung:
09.04.86 Patentblatt 86/15

(84) Benannte Vertragsstaaten:
AT BE CH DE FR GB IT LI LU NL SE

(71) Anmelder: PAPST-MOTOREN GmbH & Co. KG
Karl-Maier-Strasse 1 Postfach 35
D-7742 St. Georgen/Schwarzwald 1(DE)

(72) Erfinder: Cap, Heinrich, Ing. grad.
Mühlwiesenstrasse 8
D-7742 St. Georgen/Peterzell(DE)

(72) Erfinder: Zuckschwert, Edgar
Joh.-Sebastian-Bach-Strasse 10a
D-7742 St. Georgen/Schwarzwald(DE)

(74) Vertreter: Schwan, Gerhard, Dipl.-Ing.
Elfenstrasse 32
D-8000 München 83(DE)

(54) Antrieb für eine rotierende Kopftrommel.

(57) Für den Einbau oder den Transport ist es erforderlich, Videogeräte möglichst kompakt zu bauen, insbesondere bezüglich der Bauhöhe. Einen Teil der Bauhöhe macht bei bekannten Geräten der Antrieb der Kopftrommel aus, der unterhalb letzterer angeordnet ist.

Gemäß der Erfindung wird vorgeschlagen, den Antrieb so auszuführen, daß Rotor (5) und Stator (6) innerhalb des axialen Bereichs der Kopftrommel (1) untergebracht sind.

EP 0 177 008 A1

./...

Fig. 1

## Antrieb für eine rotierende Kopftrommel

Die Erfindung betrifft einen koaxialen Antrieb für eine Kopftrommel gemäß dem Oberbegriff des Anspruchs 1.

Videogeräte verlangen zunehmend kleinere Bauhöhe. Bei bekannten Kopftrommeln war deshalb schon vor Jahren der Koppeltransformator mit ebenem Luftspalt versehen. Auch ist es bekannt, einen permanent-magnetischen Außenrotor radial außerhalb einer eisenlosen Wicklung bei rotierendem Rückschluß innerhalb dieser Wicklung vorzusehen, wobei dieser angenähert glockenartige Außenrotor hängend unterhalb einer flanschartigen, als Gerätechassis ausgebildeten Platte, die mit dem stehenden Teil der Kopftrommel fest verbunden ist, läuft. Eine neuere Lösung sieht bei diesem letztgenannten Aufbau einen axial noch kürzeren Direktantriebsmotor vor.

Der Erfindung liegt die Aufgabe zugrunde, ein noch flacheres Laufwerk für Bandgeräte, insbesondere Videogeräte, zu bauen.

Diese Aufgabe wird erfindungsgemäß durch die im kennzeichnenden Teil des Anspruchs 1 angegebenen Merkmale gelöst.

Weitere Einzelheiten und vorteilhafte Weiterbildungen der
Erfindung ergeben sich aus den im folgenden beschriebenen
und in der Zeichnung dargestellten Ausführungsbeispielen.

Es zeigen:

Fig. 1    einen Schnitt durch ein erstes Ausführungsbeispiel
          eines Antriebs gemäß der Erfindung,

Fig. 2    einen herausgebrochenen Teilschnitt mit alternativer
          Befestigung des Rotors,

Fig. 3    einen Schnitt durch ein zweites Ausführungsbeispiel
          gemäß der Erfindung und

Fig. 4    einen Schnitt durch ein drittes Ausführungsbeispiel gemäß der Erfindung.

Gleiche oder gleichwirkende Teile werden nachfolgend mit
den gleichen Bezugszeichen bezeichnet und gewöhnlich nur
einmal beschrieben. Die Ausdrücke oben, unten, rechts und
links beziehen sich auf die Darstellung in der jeweiligen
Figur.

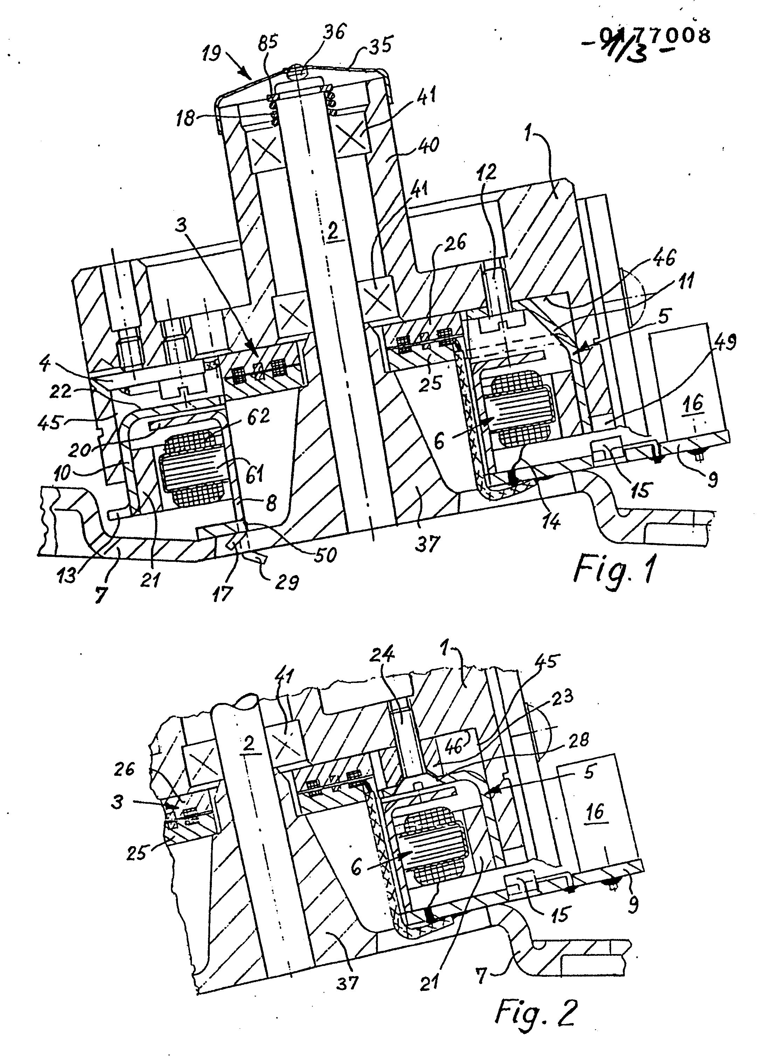

Fig. 1 zeigt den Antrieb und die Lagerung einer Kopftrommel 1 eines Video-Gerätes. Eine Achse 2 ist fest mit einem Gerätechassis verbunden. Da das Chassis im allgemeinen aus Guß besteht, ist es von Vorteil, einen Ansatz 37 mit einer entsprechenden Bohrung für die Achse 2 vorzusehen, der über das Chassis hinausragt und dadurch der Achse 2 eine gute Führung gibt. Im oberen Teil 40 der Kopftrommel 1 sind in größtmöglichem axialen Abstand zwei Kugellager 41 befestigt. Die Innenringe der Kugellager 41 sitzen mit leichtem Schiebesitz auf der Achse 2 und sind mittels Sicherungsring 85 und Feder 18 axial gegeneinander verspannt zur Verminderung der Laufgeräusche. Der wegen der Unterbringung der Lagerung nach oben verlängerte Teil 40 der Kopftrommel 1 hat eine geringere Bauhöhe als die durch den Lademechanismus vorgegebene und beeinflußt damit die Gesamthöhe des Gerätes nicht.

Die in diesem Ausführungsbeispiel einstückige Kopftrommel 1 enthält eine in Richtung auf das Chassis 7 hin offene zylindrige Ausnehmung 45, an deren Boden 45 $180^{o}$ versetzt zwei Videoköpfe angebracht sind. Ebenfalls am Boden 46 ist der rotierende Teil 26 eines scheibenförmigen Koppeltransformators 3 zentrisch zur Achse 2 befestigt, während der feststehende Teil 25 auf dem Ansatz 37 des Chassis 7 sitzt. Die von den Köpfen 4 kommenden Signale werden in bekannter Weise zunächst zum rotierenden Teil 26 geleitet und von dort induktiv auf den feststehenden Teil 25 des Koppeltransformators 3 übertragen.

Der die Kopftrommel 1 direkt antreibende Motor ist vorzugsweise als kollektorloser Gleichstrommotor mit Außenrotor 5 mit einem an seinem inneren Mantel befestigten permanentmagnetischen Rotormagneten 21 ausgebildet. Der Außenrotor 5 ist ein glockenförmiges Tiefziehteil 10 mit mindestens zwei nach oben weitergezogenen Lappen 11 mit Durchgangslöchern zur Befestigung mittels Schrauben 12 am Boden 46 der Ausnehmung 45. Dabei ist der glockenförmige Rotor 5 im wesentlichen der ebenfalls glockenförmigen Ausnehmung 45 innerhalb des unteren axialen Bereichs der Kopftrommel 1 angepaßt. Der Rotor 5 ist mit leichtem Schiebesitz in die Ausnehmung 45 eingesetzt.

Der Rotor 5 zeigt in Fig. 1 zwei Varianten der Ausgestaltung seines offenen unteren Randes. Auf der rechten Seite ist der offene untere Rand des Rotors 5 als ebene Fläche ausgebildet, während Ausnehmungen 49 für eine Codierung am unteren offenen Rand der Ausnehmung 45 der Kopftrommel 1 vorgesehen sind. Auf der linken Seite ist eine, sich radial nach außen erstreckende Krempe 13 gezeichnet, die mit Schlitzen, bzw. Ausnehmungen versehen ist und optisch oder magnetisch codiert den rotierenden Teil eines Tachosystems bildet. Diese Ausführung macht es überflüssig, an der Kopftrommel eine entsprechende Codierung anzubringen.

Ein Blechzylinder 8 bildet die Halterung für einen Stator 6, bestehend aus einem Blechpaket 61 und aus einer Wicklung 62, der am äußeren Mantel des Blechzylinders befestigt ist. Der Blechzylinder 8 weist am oberen axialen Ende einen einstückig angeformten Rand 20 auf, der sich radial nach außen über die Statoranordnung 61, 62 erstreckt und so eine Abschirmung bildet. Am unteren axialen Ende enthält der Blechzylinder 8 erste Schränklappen 17 zur Fixierung und Befestigung über einer Zentrierbohrung 50 einer Leiterplatte 9 und zweite Schränklappen 29, die durch entsprechende Ausnehmungen des Gerätechassis 7 ragen und nach dem Durchstecken umgebogen werden und somit auf kostensparende Weise den Stator 6 am Gerätechassis 7 festmachen. Die Zentrierbohrung 50 hat einen Durchmesser, der kleiner oder gleich dem Innendurchmesser des Blechzylinders 8 ist. Am Umfang der Bohrung 50 sind mindestens zwei Ausschnitte für die Schränklappen 17 und 29. Gleichzeitig ist aber auch ein Auswechseln des Stators 6 möglich, wobei der innere Durchmesser des Blechzylinders 8 etwas größer ist als der äußere Durchmesser des feststehenden Teiles 25 des Koppeltransformators 3. Die Leiterplatte 9 kann einseitig mit Eisenblech kaschiert sein, zwecks Erhöhung der Steifigkeit und einer zusätzlichen Abschirmwirkung.

Es ist auch möglich, zwischen Stator 6, bzw. Rotor 5, und Gerätechassis 7 eine zusätzliche, nicht gezeichnete Abschirmung anzubringen, die an der Leiterplattenober- oder -unterseite liegen kann. Die Anschlußdrähte 14 der Statorwicklung sind auf der Leiterplatte 9 verlötet. Die Leiterplatte 9 enthält zudem einen oder mehrere optische oder magnetische Sensoren 15 zur Erkennung von Kommutierung, Winkellage und Winkelgeschwindigkeit des Rotors 5, und einen Anschlußstecker 16.

Fig. 2 entspricht im wesentlichen dem Ausführungsbeispiel gemäß Fig. 1. Darin ist aber der Rotor 5 als glockenförmiges Tiefziehteil mit mindestens zwei Senklöchern 28 am Boden dieser Rotorglocke ausgebildet. Mittels Senkschrauben 24 wird der Rotor 5 über die Distanzbuchsen 23 am Boden 46 der Kopftrommel 1 befestigt. Diese Anordnung verbessert noch die Abschirmwirkung gegenüber dem ersten Ausführungsbeispiel, da im montierten Zustand der Rotor 5 nach oben und seitlich völlig geschlossen ist.

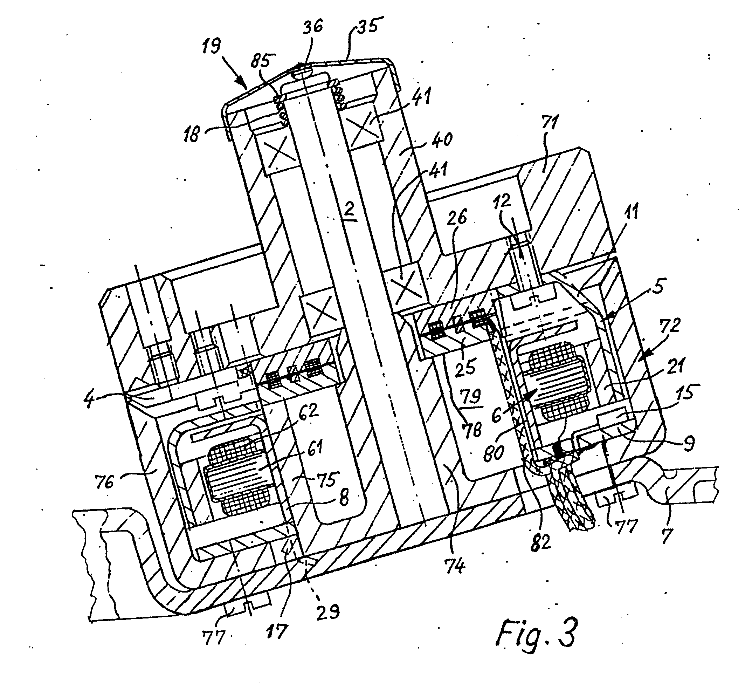

In Fig. 3 ist ein Antrieb für eine zweiteilige Kopftrommel, die aus einem oberen rotierenden Teil 71 und aus einem unteren feststehenden Teil 72 besteht, dargestellt. An der unteren Planfläche 73 des Trommelteiles 71 sind die Video-Köpfe 4, der rotierende Teil 26 des Koppeltransformators und der glockenförmige Rotor 5 wie oben näher beschrieben mittels Schrauben 12 befestigt.

Die Darstellung des unteren feststehenden Teils 72 der Kopftrommel enthält beidseitig der Achse 2, um die sich in Lagern 41 der obere Trommelteil 71 dreht, alternative Ausführungsbeispiele. Auf der linken Seite besteht der untere Trommelteil 72 aus einem topfartigen Teil mit einem zentrischen, sich etwa über die gesamte axiale Höhe des Trommelteils 72 erstreckenden Ansatz 74, dessen axiale Durchgangsbohrung die Achse 2 aufnimmt. Eine ringförmige Zwischenwand 75 ist konzentrisch radial zwischen der Außenwand des Ansatzes 74 und dem äußeren Ropfrand 76 angeordnet. Auf dem oberen Rand der Zwischenwand 75 ist der feststehende Teil 25 des Koppeltransformators 3 konzentrisch zur Achse 2 befestigt. Der Stator 6 hat den gleichen Aufbau, wie weiter oben beschrieben. Dieser gesamte Stator 6 mit der daran mittels Schränklappen 17 befestigten Leiterplatte 9 wird mit Schiebesitz über die äußere zylindrische Zwischenwand 75 eingebracht, bis die Leiterplatte am inneren Topfboden des Trommelteils 72 anliegt. Dabei werden zweite Schränklappen 29 durch dafür vorgesehene Ausnehmungen im Topfboden des Teils 72 gesteckt und anschließend umgebogen. Der mit komplettem Stator 6 und Teil 25 versehene untere Trommelteil 72 wird danach mittels Schrauben 77 am Gehäusechassis 7 befestigt.

Auf der rechten Seite der Fig. 3 ist der topfförmige Trommelteil 72 ohne Zwischenwand 75 dargestellt. Der Teil 25 des Koppeltransformators 3 wird lediglich auf dem oberen Rand 78 von beispielsweise sechs sternförmig um den Ansatz 74 angeordneten Rippen 79 zentriert und gehaltert. Der Durchmesser des im wesentlichen zylindrischen Außenrandes 80 der Rippen 79 dient der Zentrierung des Blechzylinders 8. Die Montage geschieht hier in gleicher Weise wie bei der oben beschriebenen Ausführung auf der linken Seite der Fig. 3.

Bei allen Ausführungsbeispielen ist von Bedeutung, daß die Auflage, bzw. der Rand 78 sehr genau, d. h. rechtwinklig zur Achse 2 und eben, sein muß wegen des Teiles 25.

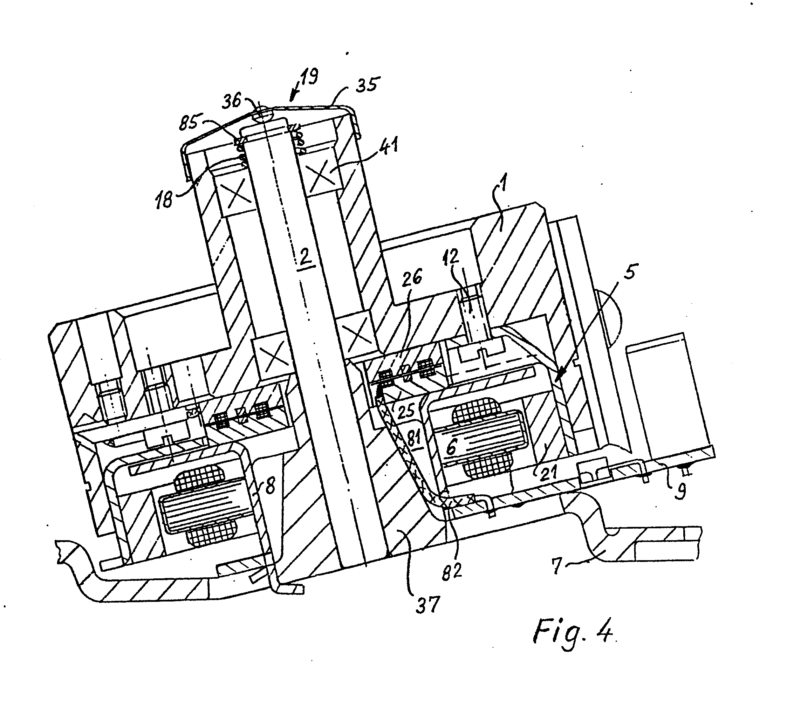

Fig. 4 zeigt ein drittes Ausführungsbeispiel, das ohne den hochgenauen und damit teuren Rand 78 auskommt. Der feststehende Teil 25 des Koppeltransformators 3 wird auf der Oberseite des Randes 20 des Blechzylinders 8 justiert und befestigt. Ebenso werden die übrigen Statorteile einschließlich Leiterplatte 9 wie oben beschrieben am Blechzylinder 8 befestigt und zudem noch die Anschlußdrähte 82 des Teiles 25 mit dieser verlötet. Anschließend wird die gesamte Statoreinheit zusammen mit Teil 25 über den im wesentlichen zylindrischen Außenrand 83 von sternförmig um den Ansatz 37 angeordneten Rippen 81 aufgesetzt und wie oben beschrieben am Gerätechassis 7 befestigt.

Der Aufbau der oben beschriebenen Ausführungsbeispiele wurde so gewählt, daß die Montage des Motors und seiner Teile oder des Koppeltransformators 3, bzw. der Tausch eines der vorgenannten Elemente in beliebiger Reihenfolge jederzeit möglich ist, so z. B. auch der Tausch der Video-Köpfe 4.
Dies wurde u. a. durch die Dimensionierung des Innendurchmessers des Stators erreicht.

Der Außendurchmesser des Rotors 5 und des Stators 6 wurde
zur Erzielung eines möglichst hohen Drehmomentes auf die
maximale Größe gelegt, die nur durch die mechanisch notwendige Wandstärke der Kopftrommel begrenzt ist.

Die Ausführung des erfindungsgemäßen Antriebs gemäß Fig. 3
zeigt außer dem obigen noch eine gegenüber dem Stand der
Technik vereinfachte und verbesserte Ausbildung einer zweiteiligen Kopftrommel, insbesondere des rotierenden Teiles 71.

Die rotierenden Teile von Kopftrommeln wurden bisher auf
einem Zwischenflansch, der auf der Welle aufgeklebt ist, verschraubt. Die Videoköpfe sind dort wie in Fig. 3 direkt an
der unteren Fläche 73 des rotierenden Trommelteiles 71 montiert, und zwar radial außerhalb des Außendurchmessers des
Zwischenflansches, während der rotierende Teil 26 am Zwischenflansch festgemacht ist. Diese bekannte Ausführung macht beim
Auswechseln des rotierenden Trommelteiles folgende Schritte
erforderlich:

1. Abschrauben einer außerhalb der Trommel befestigten
   Erdungsfeder,

2. Lösen von zwei Trommelbefestigungsschrauben,

3. Ablöten der vier Anschlüsse der Koppeltransformatorwicklung der beiden Video-Köpfe und Zurückbiegen der
   Lötfahnen zur Entfernung der Kopftrommel.

Die erfindungsgemäße Kopftrommel besteht dagegen nur aus zwei Teilen 71 und 72, da der Zwischenflansch durch die erfindungsgemäße Anordnung wegfällt. Auch das Nachdrehen der Planfläche (Kopfauflagefläche 73) des rotierenden Trommelteils 71 kann entfallen, da durch den Wegfall des Zwischenflansches weniger Summentoleranzen vorhanden sind.

Die zentrische Justierung des rotierenden Trommelteiles bei der Montage auf dem Zwischenflansch, die bei herkömmlichen Kopftrommeln notwendig ist, entfällt nicht nur, sondern wird durch die Erfindung noch in der Genauigkeit verbessert.

Das fertig bestückte rotierende Trommelteil 71 wird bei der Montage, geführt durch den genauen Sitz der Innenringe der Kugellager 41, über die in die Zentralbohrung des Ansatzes 74 des feststehenden Trommelteiles 72 eingeklebte Achse 2 geschoben bis der Innenlaufring des unteren Kugellagers 41 am oberen Rand des Ansatzes 74 anliegt. Am oberen Ende wird die Feder 18 mittels des Sicherungsringes 85 gegen den Innenlaufring des oberen Kugellagers 41 verspannt und eine Schutzkappe 19 aufgesetzt.

Um den Versatz, bzw. den Radialschlag, des feststehenden und des rotierenden Teiles der Kopftrommel (72, 71) möglichst gering zu halten, kann auch eine Fertigbearbeitung des feststehenden Teiles 72 auf der vorher eingeklebten Achse 2 erfolgen. Der erfindungsgemäße Koptrommel-Aufbau bewirkt auch, daß sämtliche Anschlußlitzen in axialer Richtung aus der Kopftrommel geführt werden können und dadurch radiale Bohrungen am Umfang des feststehenden Teiles 72 entfallen.

Die Schutzkappe 19 deckt die durchgehende Axialbohrung des verlängerten Teiles 40 nach oben ab. Die Schutzkappe 19 hat neben der Funktion der Abdeckung noch die der Ableitung von statischer Aufladung der Kopftrommel. Deshalb ist die Schutzkappe 19 aus elektrisch gut leitendem Material, wie z. B. Bronzeblech, hergestellt. Im Deckel dieser Kappe 19 ist eine federnde Zunge 35 vorgesehen, die an drei Seiten ausgestanzt wird und anschließend in Richtung auf die offene Seite der Kappe hin gebogen wird. Am federnden Ende der Zunge 35 wird etwa im Zentrum der Kappe 19 ein Kontaktplättchen 36 aus einem elektrisch leitfähigen Material, beispielsweise Kohle, befestigt. Der Innendurchmesser der Kappe ist so bemessen, daß er mit Preßsitz auf den Teil 40 gebracht werden kann.

Ansprüche

1. Antrieb für eine rotierende Kopftrommel (1) eines Gerätes
zur Aufnahme und/oder Wiedergabe von Ton- und/oder Bildsignalen auf kassettiertem, bandförmigem Trägermaterial,
wobei die Kopftrommel (1) mit dem rotierenden Teil (26)
eines Koppeltransformators (3) verbunden ist, dessen
unterer Teil (25) koaxial zur Achse (2) fest angeordnet
ist, und wobei der Antrieb ein, als kollektorloser Gleichstrommotor ausgebildeter, Außenläufermotor mit einem
glockenförmigen, permanentmagnetischen Rotor (5) ist, der
einen mindestens angenähert zylindrischen Luftspalt aufweist, dadurch   g e k e n n z e i c h n e t , daß
der Motor innerhalb des unteren axialen Bereichs der
Kopftrommel (1; 71, 72) angeordnet ist.

2. Antrieb nach Anspruch 1, dadurch   g e k e n n -
z e i c h n e t ,  daß der Stator (6) des Antriebsmotors
außen um einen Blechzylinder (8) herum angebracht ist
und daß der Blechzylinder (8) am unteren axialen Ende
am Gerätechassis (7) koaxial zur Achse (2) festgemacht
und am oberen axialen Ende mit einem einstückig angeformten Rand (20) versehen ist, der sich radial nach außen
über den Stator (6) erstreckt.

3. Antrieb nach einem der Ansprüche 1 oder 2, dadurch g e k e n n z e i c h n e t , daß der Rotor (5) als glockenförmiges Tiefziehteil (10) mit mindestens zwei nach oben weitergezogenen Lappen (11) ausgebildet ist.

4. Antrieb nach einem der Ansprüche 1 oder 2, dadurch g e k e n n z e i c h n e t , daß das glockenförmige Tiefziehteil (10) bodenseitig mindestens zwei Senklöcher (28) enthält und daß zwischen der oberen Bodenfläche (22) des Tiefziehteils (10) und der Anlagefläche (27) der Kopftrommel (1) je Senkloch (28) eine Distanzbuchse (23) vorgesehen ist.

5. Antrieb nach einem der vorhergehenden Ansprüche, dadurch g e k e n n z e i c h n e t , daß eine Leiterplatte (9) die Verdrahtung (14) der Statorspulen sowie sämtliche Bauteile für die Kommutierung des Motors und einen Anschlußstecker (16) enthält und mittels ersten Schränklappen (17) am unteren Ende des Blechzylinders (8) befestigt ist.

6. Antrieb nach einem der vorhergehenden Ansprüche, dadurch g e k e n n z e i c h n e t , daß der Blechzylinder (8) an an seinem unteren Ende zweite Schränklappen (29) enthält, die durch entsprechende Ausnehmungen des Gerätechassis (7) ragen und durch Abbiegen den Blechzylinder (8) am Gerätechassis (7) fixieren.

0177008

7. Antrieb nach einem der Ansprüche 1 bis 5, dadurch
   g e k e n n z e i c h n e t , daß die Kopftrommel aus
   einem oberen rotierenden Teil (71) und einem unteren
   feststehenden Teil (72) besteht, und daß der untere Teil
   (72) topfförmig nach oben offen ist und mit einem zylindrischen Außenrand (76), einer ringförmigen Zwischenwand
   (75) und einem zentrischen, sich etwa über die gesamte
   axiale Höhe des unteren Teils (72) erstreckenden Ansatz
   (74) ausgebildet ist.

8. Antrieb nach Anspruch 7, dadurch   g e k e n n -
   z e i c h n e t ,   daß der feststehende Teil (25) des
   Koppeltransformators (3) auf einem oberen Rand der
   Zwischenwand (75) konzentrisch befestigt ist.

9. Antrieb nach Anspruch 7, dadurch   g e k e n n -
   z e i c h n e t ,   daß der feststehende Teil (25) des
   Koppeltransformators (3) auf einem oberen zur Achse (2)
   im wesentlichen rechtwinkligen Rand (78) von sternförmig um den Ansatz (74) angeordneten Rippen (79)
   zentriert und gehaltert ist.

10. Antrieb nach einem der Ansprüche 7 bis 9, dadurch
    g e k e n n z e i c h n e t ,   daß die Leiterplatte (9),
    die durch erste Schränklappen (17) mit dem Blechzylinder
    (8) verbunden ist, auf dem Boden des unteren feststehenden Teiles (72) der Kopftrommel aufliegt und mittels
    verlängerter zweiter Schränklappen (29) an diesem befestigt ist.

11. Antrieb nach einem der vorhergehenden Ansprüche, dadurch g e k e n n -
z e i c h n e t , daß der Blechzylinder (8) einen
größeren Durchmesser als der untere Teil (25) des
Koppeltransformators (3) aufweist.

12. Antrieb nach einem der vorhergehenden Ansprüche, dadurch
g e k e n n z e i c h n e t , daß der Durchmesser
des Randes (20) kleiner ist als der Innendurchmesser
des Rotormagneten (21).

13. Antrieb nach einem der Ansprüche 1 bis 6, dadurch
g e k e n n z e i c h n e t , daß der untere Teil (25)
des Koppeltransformators (3) auf dem Rand (20) zur
Achse (2) konzentrisch befestigt ist und daß sternförmige Rippen (81) des Ansatzes (37) den Innendurchmesser
des Blechzylinders (8) zentrieren.

14. Antrieb nach Anspruch 13, dadurch g e k e n n -
z e i c h n e t , daß Stator (6), Leiterplatte (9) und
unterer Teil (25) des Koppeltransformators (3), der über
die Leitung (82) mit der Leiterplatte (9) verbunden ist,
eine Einheit bilden.

15 . Antrieb nach einem der vorhergehenden Ansprüche, dadurch
     g e k e n n z e i c h n e t , daß der obere Teil (40) der
     Kopftrommel (1) mit einer Schutzkappe (19) abgedeckt ist
     und daß ein aus dem Boden dieser Kappe (19) teilweise
     ausgestanzte federnde Zunge (35) mit einem Kontaktplättchen (36) axial gegen die Achse (2) drückt.

16. Antrieb nach einem der vorhergehenden Ansprüche, dadurch
    g e k e n n z e i c h n e t , daß der glockenförmige
    Außenläufermotor mit der äußeren Bodenfläche seiner
    Glockenform zur inneren axialen, vorzugsweise unteren
    Bodenfläche des rotierenden Teils der Kopftrommel weist.

17. Antrieb nach Anspruch 16, dadurch   g e k e n n -
    z e i c h n e t , daß die Bodenflächen, vorzugsweise
    in einem Ringraum radial außerhalb eines Koppeltrans-
    formators mit ebenem Luftspalt, miteinander drehfest
    verbunden sind.

18. Antrieb nach Anspruch 16, dadurch   g e k e n n -
    z e i c h n e t , daß der Außenläufer über seine zylindrische Außenfläche mit dem rotierenden Teil der Kopf-
    trommel verbunden ist.

Fig. 1

Fig. 2

Fig. 3

Fig. 4

| | EINSCHLÄGIGE DOKUMENTE | | EP 85112376.0 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| X | <u>US - A - 3 867 725</u> (JANSSEN) <br> * Fig. 4; Spalte 3, Zeile 54 - Spalte 4, Zeile 42 * <br> -- | 1 | G 11 B 5/52 |
| X | <u>US - A - 4 347 536</u> (MIYASHITA) <br> * Fig. 1; Zusammenfassung * <br> -- | 1 | |
| X,P | <u>EP - A1 - 0 128 222</u> (MATSUSHITA) <br> * Fig. 3,7; Seite 6, Zeilen 3-12 * <br> -- | 1 | |
| X,P | <u>DE - A1 - 3 325 047</u> (TELDIX) <br> * Fig. 1-3; Ansprüche; Zusammenfassung * <br> -- | 1 | |
| A | <u>DE - A1 - 3 319 029</u> (PAPST) <br> * Fig. 1; Ansprüche; Seite 8, Zeilen 3-11 * <br> ---- | 1 | **RECHERCHIERTE SACHGEBIETE (Int. Cl.4)** <br><br> G 11 B 5/00 <br> G 11 B 15/00 <br> H 02 K 29/00 <br> H 04 N 5/00 <br> H 01 F 29/00 |

Der vorliegende Recherchenbericht wurde für alle Patentansprüche erstellt.

| Recherchenort | Abschlußdatum der Recherche | Prüfer |
|---|---|---|
| WIEN | 10-01-1986 | BERGER |